# EUROPEAN PATENT APPLICATION

(11) **EP 4 371 799 A1**
(43) Date of publication of application: **22.05.2024**
(21) Application number: 22208410.5
(22) Date of filing: 18.11.2022
(51) Int. Cl.: B60L 1/00, B60L 3/00, B60L 3/04

(54) **ELECTRIC DRIVE DEVICE FOR A VEHICLE, VEHICLE AND METHOD FOR OPERATING AN ELECTRIC DRIVE DEVICE FOR A VEHICLE**

(71) Applicant: Valeo eAutomotive Germany GmbH, 91056 Erlangen (DE)
(72) Inventor: Lewandowski, Marek, 91056 Erlangen (DE)
(74) Representative: Valeo Powertrain Systems

(57) **Abstract**

Electric drive device (1) for a vehicle (100), comprising:
- an electric machine (2);
- a housing (3) having a DC power interface (4) connectable with a highvoltage battery (101) of the vehicle (100) disposed outside the housing (3);
- DC power lines (5) configured to carry a DC voltage provided at the DC power interface (4);
- a DC link capacitor (6) connected between the DC power lines (5);
- an inverter (7) having an AC output (8) connected to the electric machine (2) and a DC input (9) connected to the DC power lines (5); and
- an electric auxiliary device (10) electrically suppliable via the DC power lines (5) and configured to dissipate electric energy stored in the DC link capacitor (6) and/or in the electric machine (2) in an operation state, where the highvoltage battery (101) is disconnected from the DC power interface (4);
wherein the DC power lines (5), the DC link capacitor (6) and the auxiliary device (10) are arranged inside the housing (3).

## Description

The present invention relates to an electric drive device for a vehicle. Further, the present invention relates to a vehicle and to a method for operating an electric drive device for a vehicle.

Document JP 2016-77027 A discloses a hybrid vehicle including a motor supplied by an inverter, which is connected to a battery voltage system power line. A smoothing capacitor is connected to the battery voltage system power line. Further, a compressor of an air conditioner is connected to the battery voltage system power line. When disconnecting a battery, the electric charge stored in the capacitor is dissipated by the compressor.

Document US 2010/00261249 A1 discloses generator apparatus. Upon detecting a load dump, an overvoltage caused by the load dump process is stored in an energy storage.

In automotive electric drive applications, there are several scenarios, where a high-voltage battery is disconnected from a DC link, via which an inverter providing an AC output to an electric machine is supplied. Such scenarios may be a vehicle crash or a sudden battery disconnect event, also referred to as load dump. In this case, energy stored in the DC link capacitor and/or in the electric machine has to be dissipated in a controlled manner.

According to the prior art cited above, it has already been proposed to use a compressor of an air conditioning of the vehicle to dissipate the energy. However, in the case of a crash, electrical connections to the compressor may be disrupted so that the energy dissipation may not be performed reliably. Further, additional components dedicated for dissipating the energy, such as additional resistors, have been proposed. However, such additional components are costly and require additional mounting space.

It is an object of the present invention to improve dissipation of energy stored in a DC link capacitor and/or in an electric machine of an electric drive device. According to the invention, this object is solved by an electric drive device for a vehicle, comprising: an electric machine; a housing having a DC power interface connectable with a high-voltage battery of the vehicle disposed outside the housing; DC power lines configured to carry a DC voltage provided at the DC power interface; a DC link capacitor connected between the DC power lines; an inverter having an AC output connected to the electric machine and a DC input connected to the DC power lines; and an electric auxiliary device electrically suppliable via the DC power lines and configured to dissipate electric energy stored in the DC link capacitor and/or in the electric machine in an operation state, where the high-voltage battery is disconnected from the DC power interface; wherein the DC power lines, the DC link capacitor and the auxiliary device are arranged inside the housing.

The electric drive device for a vehicle according to the invention comprises an electric machine. The electric drive device for further comprises a housing. The housing has a DC power interface. The DC power interface is connectable with a high-voltage battery of the vehicle. The high-voltage battery is disposed outside the housing. The electric drive device further comprises DC power lines. The DC power lines are configured to carry a DC voltage. The DC voltage is provided at the DC power interface. The electric drive device further comprises a DC link capacitor. The DC link capacitor is connected between the DC power lines. The electric drive device further comprises an inverter. The inverter has an AC output. The AC output is connected to the electric machine. The inverter has a DC input. The DC input is connected to the DC power lines. The electric drive device comprises an electric auxiliary device. The electric auxiliary device is electrically suppliable via the DC power lines. The electric auxiliary device is configured to dissipate electric energy in an operating state, where the high-voltage battery is disconnected from the DC power interface, the electric energy being stored in the DC link capacitor and/or in the electric machine. The DC power lines, the DC link capacitor and the auxiliary device are arranged inside the housing.

For dissipating the energy stored in the DC link capacitor and/or in the electric machine, the electric drive device according to the invention uses the electric auxiliary device, which is arranged in the same housing as the DC power lines and the DC link capacitor. Thereby, it is assured that the electric auxiliary device and the DC power lines, via which the energy to be dissipated is transferred to the electric auxiliary device, are secured from external impacts, e.g., impacts caused by a crash event of the vehicle. Advantageously, in the operating state, where the high-voltage battery is disconnected from the DC power interface, the electric auxiliary device is reliably present for receiving the electric energy to be dissipated. Further, the electric auxiliary device allows to omit dedicated components for energy dissipation such as additional resistors. Advantageously, costs and mounting space for such dedicated components can be saved.

Typically, the electric machine is a rotating electric machine such as a, particularly permanently or electrically excited, synchronous machine or induction machine. The electric machine may be operable as a motor and/or a generator.

Preferably, the housing surrounds the DC power lines, the DC link capacitor and the auxiliary device in all spatial directions. The housing may be made of metal, particularly aluminum or an aluminum alloy. The DC power interface may be arranged within an outer wall of the housing.

The DC power lines may comprise a first line and a second line for different potentials of the DC voltage provided at the DC power interface. The DC link capacitor may be directly connected to the first and the second line.

The electric drive device may be configured to be operated at the DC voltage having a value of at least 100 V, preferably at least 400 V, more preferably at least 800 V. The DC link capacitor may also be considered as smoothing capacitor. Preferably, the DC link capacitor has a capacitance of at least 100 µF, preferably at least 400 µF. The inverter may be configured to provide a multiphase AC voltage, preferably a three-phase AC voltage, at the AC output. The inverter may comprise a power unit, comprising a plurality of power semiconductor switching elements, e.g. IGBTs or Power MOSFETs, being arranged in half bridges.

Said first operating state may be a load dump scenario and/or an active discharging of the DC link capacitor. The electric drive device may comprise a contactor configured to disconnect the battery from the DC power interface. Alternatively, the DC power interface may be disconnectable from the battery by means of an external contactor of the vehicle, e.g., a battery main switch. The electric auxiliary device may be configured to provide a function for the electric drive device and/or the vehicle in a second operating state, where the high-voltage battery is connected to the DC power interface. Preferably, the electric auxiliary device comprises a motor.

According to a preferred embodiment of the electric drive device, the electric auxiliary device comprises one fluid transportation device or multiple fluid transportation devices configured to transport a fluid by means of an electric motor suppliable via the DC power lines. Fluid transportation devices are suitable for dissipating the electric energy as they draw sufficiently high power during operation. Further, they may have certain reserves to be accelerated to their maximum rated fluid transportation speed without causing any consequential damage.

The fluid transportation means may comprise hydromechanical components, particularly an impeller and/or a volute and/or a motor, and/or electronic components, particularly a power stage for supplying the motor.

Exemplarily, the fluid transportation device or one of the fluid transportation devices is a compressor for an air conditioning device of the vehicle. Thus, the compressor may be integrated into the housing and used for energy dissipation in the (first) operating state, where the high-voltage battery is disconnected from the DC power interface. Additionally or alternatively, the fluid transportation device or one of the fluid transportation devices is a pump for a power steering device of the vehicle. Alternatively or additionally, the fluid transportation device or one of the fluid transportation devices is a vacuum pump for a brake device of the vehicle. Preferably, the housing comprises a fluid inlet and a fluid outlet for the or a respective fluid transportation device. Thereby, the fluid transportation device may be accessible from outside the housing or the electric drive device, respectively, so as to connect the fluid transportation device to further components of the air conditioning device, the power steering device or the brake device.

Furthermore, the fluid transportation device or one of the fluid transportation devices may be a coolant pump configured to transport the coolant through a cooling channel formed with the electric machine and/or the inverter. Thus, also a component of the electric machine and/or the inverter may be used for energy dissipation. The cooling channel may be formed in the inverter only or in the electric machine only or may parallelly or serially lead through the electric machine and the inverter. The cooling channel may extend through the cooling jacket of a stator of the electric machine and/or through a shaft attached to a rotor of the electric machine or through a rotor core of the electric machine. When formed with the inverter, the cooling channel may be configured to dissipate heat from the switching elements of the power unit.

Preferably, the electric auxiliary device is operable depending on a control signal, the electric drive device further comprising a controller configured to receive a discharge request signal and to control, upon receiving the discharge request signal, the electric auxiliary device to operate by overruling the control signal. Thereby, when receiving the discharge request signal, the usage of the electric auxiliary device for dissipating the energies charging the DC link capacitor and/or the electric machine may be prioritized over the normal operation of the electric auxiliary device. The controller may be configured to receive the control signal and/or the discharge request signal from an ECU or different ECUs of the vehicle. Therein, "ECU" means "electronic control unit" as understood on the field of automotive control.

It is further preferred that the controller is configured to detect, whether the discharge request signal is indicative for a first discharge mode, particularly an emergency discharging mode, and/or for a second discharge mode, particularly a vehicle shut-down mode, and to control the electric auxiliary device to operate depending on the detected discharge mode. Therein, the controller may be configured to control the electric auxiliary device to operate, upon detecting the first discharge mode, with a higher power consumption and/or for longer the time then upon detecting the second discharge mode.

Preferably, the electric auxiliary device has an maximum rated operating parameter, above which the electric auxiliary device is damaged or destroyed, wherein the controller is configured to control the electric auxiliary device, upon detecting the first discharge mode, to operate the electric auxiliary device in an operating range above the maximum rated operating parameter and/or to control the electric auxiliary device, upon detecting the second discharge mode, to operate the electric auxiliary device in an operating range below the maximum rated operating parameter. In the first discharge mode, the electric auxiliary device may be intentionally overloaded so as to surely dissipate the energy stored in the DC link capacitor and/or in the electric machine, whereas in the second discharge mode, the electric auxiliary device may be operated below its maximum rated operating power meter, therein assuring that the electric auxiliary device will not be damaged or destroyed. The first discharge mode may be associated with a vehicle crash and/or the second discharge mode may be associated with a vehicle shut down. The controller may be further configured to control the inverter, upon receiving the discharge request signal, to be transferred into a freewheeling mode or into an active short circuit mode. The freewheeling mode may be a mode, where all switching elements of the power unit are controlled to be blocking, so that the power unit works as a rectifier and feeds back electric energy stored in the electric machine into the DC link. The active short circuit mode may be a mode, in which the switching elements connected to the first or the second line of the DC power lines are controlled to be conducting and the switching elements connected to the other one of the first and second line of the DC power lines of the half bridges are controlled to be blocking so as to short-circuit stator windings of the electric machine.

The housing may further comprise fastening means configured to fasten the electric drive device to a chassis structure of the vehicle.

Preferably, the electric machine is arranged inside the housing as well. Preferably, the electric drive device further comprises a gearbox arranged inside the housing. Preferably, the electric drive device further comprises a bearing arrangement mounted in the housing and an output shaft rotatably coupled with the electric machine, particularly buyer the gearbox. Therein, the output shaft may be supported by the bearing arrangement. An electric drive device, in which the electric machine and/or the gearbox and/or the bearing arrangement are arranged inside the housing may be considered as electric axle (eAxle). Such an electric axle integrates the electric auxiliary devices and major parts of the drivetrain of the electric vehicle. The fluid transportation device or some of the fluid transportation devices or all fluid transportation devices may be coupled to the DC power lines via a DC/DC converter configured to reduce the DC voltage provided at the DC power interface to a lower operating voltage of the respective electric auxiliary device.

The above object is further solved by a vehicle, comprising an electric drive device according to the invention, the electric drive device being configured to drive the vehicle.

The vehicle according to the invention may further comprise an air condition device comprising the or a compressor formed by the electric auxiliary device. The vehicle according to the invention may further comprise the or a power steering device comprising a pump formed by the electric auxiliary device. The vehicle according to the invention may further comprise the or a break device comprising a vacuum pump formed by the electric auxiliary device.

The above object is further solved by a method for operating an electric drive device for a vehicle, the electric drive device comprising an electric machine; a housing having a DC power interface connectable with a high-voltage battery of the vehicle disposed outside the housing; DC power lines configured to carry a DC voltage provided at the DC power interface; a DC link capacitor connected between the DC power lines; an inverter having an AC output connected to the electric machine and a DC input connected to the DC power lines; and an electric auxiliary device electrically suppliable via the DC power lines, the DC power lines, the DC link capacitor and the auxiliary device being arranged inside the housing; the method comprising: dissipating, by means of the electric auxiliary device, electric energy stored in the DC link capacitor and/or in the electric machine in an operation state, where the high-voltage battery is disconnected from the DC power interface.

All statements concerning the electric drive device according to the invention apply analogously to the vehicle according to the invention and to the method according to the invention, so that advantages described with regard to the electric drive device may be achieved by the vehicle and the method as well.

Further advantages and details of the present invention are described in the following embodiments with reference to the drawings, which schematically show:
Fig. 1 a block diagram of an embodiment of the vehicle according to the invention comprising an electric drive device according to the invention; and
Fig. 2 a flow diagram of an embodiment of the method according to the invention.

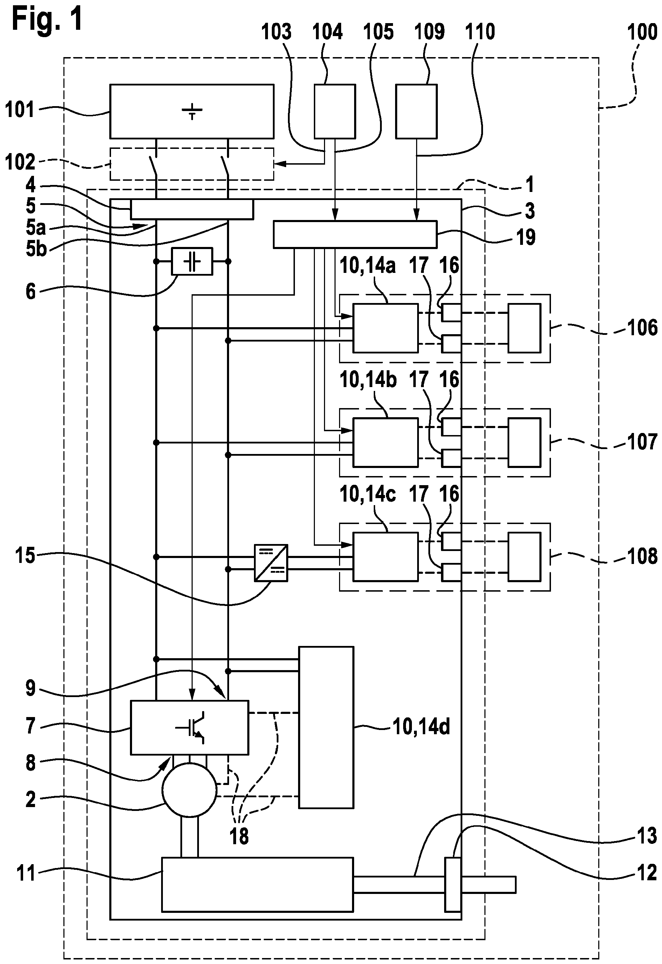

Fig. 1 is a block diagram of an embodiment of a vehicle 100 comprising an embodiment of an electric drive device 1.

The vehicle 100 is an electrically drive vehicle, e.g. a hybrid vehicle or a battery-electric vehicle (BEV). The vehicle 100 further comprises a high-voltage battery 101 and a contactor 102 configured to connect the battery 101 to the electric drive device 1 and to disconnect the battery 101 from the electric drive device depending on a disconnect request signal 103 provided from a first vehicle ECU 104. Further, the first vehicle ECU 104 is configured to provide a discharge request signal 105 to the electric drive device 1, which requests the electric drive device 1 to dissipate electric energy stored therein, e.g. due to a vehicle crash detected by the first vehicle ECU 104 or any other event, in which the battery 101 is disconnected from the electric drive device 1. Thus, in general, the disconnect request signal 103 and the discharge request signal 105 are provided simultaneously by the first ECU 104. The vehicle 100 further comprises an air condition device 106, a power steering device 107 and a brake device 108. A second vehicle ECU 109 is configured to provide a control signal 110 for controlling the operation of a respective one of the afore-mentioned devices 106, 107, 108.

The electric drive device 1 comprises an electric machine 2, e.g. a permanently or electrically excited synchronous machine or an induction machine, and a housing 3, e.g. made of aluminum or an aluminum alloy. The housing 3 has a DC power interface 4 connectable with the battery 101, which is disposed outside the housing 3.

The electric drive device 1 further comprises DC power lines 5 configured to carry a DC voltage provided at the DC power interface 4. The DC power lines 5 comprise a first line 5a for a high potential of the DC voltage and a second line 5b for a low potential of the DC voltage. A DC link capacitor 6 of the electric drive device 1 is connected between the DC power lines 5.

The electric drive device 1 further comprises an inverter 7 having an AC output 8 connected to the electric machine 2 and a DC input 9 connected to the DC power lines 5. The inverter 7 comprises a power unit (not shown) with a plurality of power semiconductor switching elements, e.g. IGBTs or power MOSFETs, being arranged in half bridges. Therein, each half bridge is connected to the first line 5a and to the second line 5b.

The electric drive device 1 further comprises an electric auxiliary device 10 that is electrically suppliable via the DC power lines 5 and configured to dissipate electric energy stored in the DC link capacitor 6 and/or in the electric machine 2 in a first operation state, where the battery 101 is disconnected from the DC power interface 4.

The DC power lines 5, the DC link capacitor 6, the electric auxiliary device 10 and, in the present embodiment, the electric machine 2 are arranged inside the housing 3, which surrounds the afore-mentioned components in all spatial directions. Further, a gear box 11, a bearing arrangement 12 and an output shaft 13 are arranged inside the housing 3. The bearing arrangement 12 being mounted in the housing 3 supports the output shaft 13 being rotatably coupled with the electric machine 2 via the gear box 11. Thus, the drive arrangement may be considered as electronic axle integrating the electric auxiliary device 10 and major parts of a drivetrain of the electric vehicle 100.

In the present embodiment, the electric auxiliary device 10 comprises one or multiple fluid transportation devices 14a, 14b, 14c, 14d. Each fluid transportation device 14a-d is configured to transport a fluid, e.g. water, oil, a coolant agent or a gas, by means of an electric motor suppliable via the DC power lines 5. Therein, the fluid transportation devices 14a, 14b, 14c may be directly supplied by the high DC voltage on the DC power lines 5 or, as depicted with regard to the fluid transportation device 14d, via a DC-DC converter 15 that steps down the high DC voltage to a lower operation voltage for the fluid transportation device 14d. Note that the fluid transportation 14d being supplied via the DC-DC converter 15 is just an exemplary configuration. It is possible that none or all or others of the fluid transportation devices 14a-d are supplied via the or a DC-DC converter 15.

With regard to the respective fluid transportation devices 14a-c, the fluid transportation device 14a is a compressor for the air condition device 106 of the vehicle. The fluid transportation device 14b is a pump for the power steering device 107 of the vehicle 100. The fluid transportation device 14c is a vacuum pump for the brake device 108 of the vehicle 100. Each of the fluid transportation devices 14a-c is connected to a fluid inlet 16 and to a fluid outlet 17 formed in the housing 3 so that a cooling path (indicated by dashed lines) through the respective fluid transportation device 14a-c and a further component 106a, 107a, 108a of the air condition device 106, the power steering device 107 or the brake device 108, respectively, being outside the housing 3 is formed.

The fluid transportation device 14d is a coolant pump configured to transport a coolant through a cooling channel 18 formed with the electric machine 2 and the inverter 7. The cooling channel 18 extends entirely or partially within the housing 3. With regard to the cooling channel 18 being formed with the electric machine 2, the cooling channel 18 may extend through a cooling jacket for a stator (not shown) of the electric machine 2 and/or through a shaft attached to a rotor (not shown) of the electric machine 2 and/or through a rotor core (not shown) of the electric machine 2. With regard to the cooling channel 18 being formed with the inverter 7, the cooling channel 18 may be configured to dissipate heat from the afore-mentioned semiconductor switching elements. Alternatively, one or two separate cooling channels 18 formed with the electric machine 2 or with the inverter 7, respectively, are provided.

As can be seen in Fig. 1, the electric drive device 1 further comprises a controller 19, the function of which is described hereinafter with regard to an embodiment of a method for operating the electric drive device 1. Therein, the controller 19 is configured to carry out steps of the method.

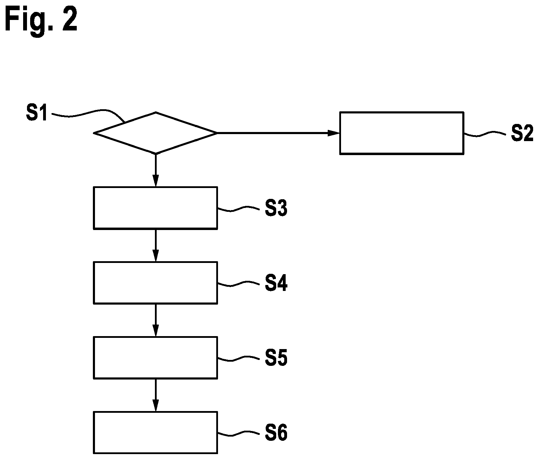

Fig. 2 is a flow diagram of the embodiment of said operating method.

The method comprises a step S1 of evaluating, whether the discharge request signal 105 is received. If the discharge request signal 105 is not received the method continues with a step S2, in which the electric auxiliary device 10 or the fluid transportation devices 14a-d, respectively, are controlled according to the control signal 110. For example, the control signal 110 is simply fed through the controller 19 to the electric auxiliary device 10.

If the discharge request signal 105 is received, the method continues with a step S3. Note that, in this case, the battery 101 is typically disconnected by means of the contactor 102 from the DC voltage interface 4 so that the electric drive device 1 is in the first operating mode. The step S3 is a step of controlling the inverter 7 to be transferred into a freewheeling mode or into an active short-circuit mode. In the freewheeling mode, electric energy stored in electric machine 3 is fed back through inverter 7 into the direction of the DC link capacitor 6. In the active short-circuit mode, stator windings of the electric machine 2 are short-circuited by means of the switching devices of the power unit so that electric energy stored in the electric machine 3 is dissipated therein.

The method continues with a step S4 of detecting, whether the discharge request signal 105 is indicative for a first discharge mode or for a second discharge mode. Therein, the first discharge mode is an emergency discharging mode, e.g. due to a crash or another critical situation detected by the first vehicle ECU 104. The second discharge mode is a vehicle shut down mode, e.g. initiated by a user of the vehicle 100 or caused by a scenario of less criticality detected by the first vehicle ECU 104. The method continues with a step S5 of controlling the electric auxiliary device 10. Controlling is performed by overruling the control signal 110 and depending on the discharge mode detected in step S4. Therein, the electric auxiliary device 10 is operated with a predefined power consumption and for a predefined time if the second discharge mode has been detected and with a higher power consumption and for a longer time if the first discharge mode has been detected. Further, in the first discharge mode, the electric auxiliary device 10 is operated in an operating range above a maximum rated operating parameter and in an operating range below the maximum rated operating parameter in the second discharge mode.

In a step S6 of the method, electric energy stored in the DC link capacitor and/or in the electric machine is dissipated by means of the electric auxiliary device 10 as a result of controlling the electric auxiliary device 10 according to step S5.

## Claims

1. Electric drive device (1) for a vehicle (100), comprising:
- an electric machine (2);
- a housing (3) having a DC power interface (4) connectable with a high-voltage battery (101) of the vehicle (100) disposed outside the housing (3);
- DC power lines (5) configured to carry a DC voltage provided at the DC power interface (4);
- a DC link capacitor (6) connected between the DC power lines (5);
- an inverter (7) having an AC output (8) connected to the electric machine (2) and a DC input (9) connected to the DC power lines (5); and
- an electric auxiliary device (10) electrically suppliable via the DC power lines (5) and configured to dissipate electric energy stored in the DC link capacitor (6) and/or in the electric machine (2) in an operation state, where the high-voltage battery (101) is disconnected from the DC power interface (4);
wherein the DC power lines (5), the DC link capacitor (6) and the auxiliary device (10) are arranged inside the housing (3).

2. Electric drive device according to claim 1, wherein
the electric auxiliary device (10) comprises one fluid transportation device or multiple fluid transportation devices (14a-d) configured to transport a fluid by means of an electric motor suppliable via the DC power lines (5).

3. Electric drive device according to claim 2, wherein
- the fluid transportation device or one of the fluid transportation devices (14a) is a compressor for an air condition device (106) of the vehicle (100) and/or
- the fluid transportation device or one of the fluid transportation devices (14b) is a pump for a power steering device (107) of the vehicle (100) and/or
- the fluid transportation device or one of the fluid transportation devices (14c) is a vacuum pump for a brake device (108) of the vehicle (100).

4. Electric drive device according to claim 2 or 3, wherein
the housing (3) comprises a fluid inlet (16) and a fluid outlet (17) for the or a respective fluid transportation device (14a-c).

5. Electric drive device according to claim 2 or 3, wherein
the fluid transportation device or one of the fluid transportation devices (14d) is a coolant pump configured to transport a coolant through a cooling channel (18) formed with the electric machine (2) and/or the inverter (7).

6. Electric drive device according to any of the preceding claims, wherein
the electric auxiliary device (10) is operable depending on a control signal (110), the electric drive device (1) further comprising a controller (19) configured to receive a discharge request signal (105) and to control, upon receiving the discharge request signal (105), the electric auxiliary device (10) to operate by overruling the control signal (105).

7. Electric device according to claim 6, wherein
the controller (19) is configured to detect, whether the discharge request signal (105) is indicative for a first discharge mode, particularly an emergency discharging mode, and/or for a second discharge mode, particularly a vehicle shut-down mode, and to control the electric auxiliary device (10) to operate depending on the detected discharge mode.

8. Electric device according to claim 7, wherein
the controller (19) is configured to control the electric auxiliary device (10), upon detecting the first discharge mode, to operate with a higher power consumption and/or for a longer time than upon detecting the second discharge mode.

9. Electric device according to claim 7 or 8, wherein
the electric auxiliary device (10) has an maximum rated operating parameter, above which the electric auxiliary device is damaged or destroyed, wherein the controller (19) is configured to control the electric auxiliary device (10), upon detecting the first discharge mode, to operate the electric auxiliary device in an operating range above the maximum rated operating parameter and/or to control the electric auxiliary device, upon detecting the second discharge mode, to operate the electric auxiliary device in an operating range below the maximum rated operating parameter.

10. Electric device according to any of claims 6 to 9, wherein
the controller (19) is configured to control the inverter (7), upon receiving the discharge request signal, to be transferred into a freewheeling mode or into an active short-circuit mode.

11. Electric drive device according to any of the preceding claims, wherein
the housing (3) comprises fastening means configured to fasten the electric drive device (1) to a chassis structure of the vehicle (100).

12. Electric drive device according to any of the preceding claims, wherein
- the electric machine (2) is arranged inside the housing (3) and/or
- the electric drive device (1) further comprises a gear box (11) arranged inside the housing (3) and/or
- the electric drive device further comprises a bearing arrangement (12) mounted in the housing (3) and an output shaft (13) rotatably coupled with the electric machine (2), particularly via the gear box (11), the output shaft (13) being supported by the bearing arrangement (12).

13. Vehicle (100), comprising an electric drive device (1) according to any of the preceding claims, the electric drive device (1) being configured to drive the vehicle (100).

14. Vehicle according to claim 13, further comprising
- an air condition device (106) comprising a compressor formed by the electric auxiliary device (10) and/or
- a power steering device (107) comprising a pump formed by the electric auxiliary device (10) and/or
- a brake device (108) comprising a vacuum pump formed by the electric auxiliary device (10).

15. Method for operating an electric drive device (1) for a vehicle (100), the electric drive device (1) comprising
- an electric machine (2);
- a housing (3) having a DC power interface (4) connectable with a high-voltage battery (101) of the vehicle (100) disposed outside the housing (3);
- DC power lines (5) configured to carry a DC voltage provided at the DC power interface (4);
- a DC link capacitor (6) connected between the DC power lines (5);
- an inverter (7) having an AC output (8) connected to the electric machine (2) and a DC input (9) connected to the DC power lines (5); and
- an electric auxiliary device (10) electrically suppliable via the DC power lines (5),
the DC power lines (5), the DC link capacitor (6) and the auxiliary device (10) being arranged inside the housing (3);
the method comprising:
dissipating, by means of the electric auxiliary device (10), electric energy stored in the DC link capacitor (6) and/or in the electric machine (2) in an operation state, where the high-voltage battery (101) is disconnected from the DC power interface (4).
